# EUROPEAN PATENT APPLICATION

(11) **EP 3 095 659 A1**
(43) Date of publication of application: **23.11.2016**
(21) Application number: 15168214.3
(22) Date of filing: 19.05.2015
(51) Int. Cl.: B60W 30/09, B62D 15/02, G08G 1/16, B60W 10/18, B60W 10/20, G06K 9/00, B60W 30/095, B60W 50/08

(54) **METHOD AND SYSTEM FOR PROVIDING A DRIVER BEHAVIOUR ADAPTED EVASIVE MANOEUVRE**

(71) Applicant: Volvo Car Corporation, 40531 Göteborg (SE)
(72) Inventor: Jonasson, Mats, 43349 Partille (SE); Silvlin, Jonatan, 41501 Göteborg (SE); Yang, Derong, 42137 Västra Frölunda (SE)
(74) Representative: Volvo Car Corporation

(57) **Abstract**

The present disclosure relates to a method performed by an evasive manoeuvre system (1) for providing a driver behaviour adapted evasive manoeuvre to a vehicle (2) at risk of an impending or probable collision. The evasive manoeuvre system detects (1001) a driving environment (3). Furthermore, the evasive manoeuvre system determines (1002) that the vehicle is at risk of colliding with an obstacle (5). The evasive manoeuvre system moreover determines (1003) a drivable zone (6) considered safe driving for the vehicle. Further, the evasive manoeuvre system detects (1004) a driver initiated collision avoidance manoeuvre. Moreover, the evasive manoeuvre system intervenes (1005) in control of the vehicle, such that the vehicle is maintained within the drivable zone.

The disclosure also relates to an evasive manoeuvre system in accordance with the foregoing, and a vehicle comprising at least a portion of the evasive manoeuvre system.

## Description

### TECHNICAL FIELD

The present disclosure relates to an evasive manoeuvre system for providing a driver behaviour adapted evasive manoeuvre to a vehicle at risk of an impending or probable collision with an obstacle.

### BACKGROUND

Since millions of motor vehicles are travelling along roads around the globe day and night, year around, vehicle accidents are bound to happen. In striving to avoid vehicle accidents, however, motor vehicles may be provided with driver assistance systems. These systems monitor the surroundings of the vehicle, decide whether a collision with an object is likely to occur, and intervene with the steering system or the brake system of the vehicle in order to prevent an impending or probable collision. Collision avoidance manoeuvers, especially at high vehicle speeds, offer advantages as compared to mere emergency braking, since many accidents can be avoided by evasive manoeuvers, for instance by steering around an obstacle.

In providing a collision avoidance manoeuvre to avoid collision with an obstacle, it is commonly known to define an avoiding path for the vehicle and subsequently influence the steering system of the vehicle in such a manner that the vehicle follows the calculated avoiding path. US 2014/0379244, for instance, relates to an avoidance manoeuvre assistant for motor vehicles, and discloses how an emergency avoidance function checks if an emergency avoidance manoeuvre is necessary and then intervenes in the dynamics of the vehicle using an intervention force varying within predefined limits, to assist in the emergency avoidance manoeuvre. The limits for the intervention force varies as a function of a difference between actual dynamics determined by actions of the driver and setpoint dynamics determined by the emergency avoidance function.

However, although US 2014/0379244 provides an avoidance trajectory, on which the obstacle may be safely driven around, the provided avoidance trajectory does not take into consideration that the vehicle driver may be represented by a variety of different types of drivers, which may handle the situation with the impending or probable collision differently.

### SUMMARY OF THE INVENTION

It is therefore an object of embodiments herein to provide an improved evasive manoeuvre approach for a vehicle at risk of an impending or probable collision with an obstacle.

According to a first aspect of embodiments herein, the object is achieved by a method performed by an evasive manoeuvre system for providing a driver behaviour adapted evasive manoeuvre to a vehicle at risk of an impending - or probable - collision. The evasive manoeuvre system detects a driving environment of the vehicle. Furthermore, the evasive manoeuvre system determines that the vehicle is at risk of colliding with an obstacle. Moreover, the evasive manoeuvre system determines a drivable zone considered safe driving for the vehicle. The evasive manoeuvre system further detects a driver initiated collision avoidance manoeuvre. Moreover, the evasive manoeuvre system intervenes in the control of the vehicle, such that the vehicle is maintained within the drivable zone.

Thereby, an approach is provided which assists the driver in avoiding a collision in a manner pertinent to how the driver controls the vehicle in his/her attempt to avoid said impending or probable collision. That is, since the evasive manoeuvre system detects a driving environment of the vehicle, a surrounding of the vehicle is established which may have impact on the vehicle's driving conditions. Moreover, since the evasive manoeuvre system furthermore determines that the vehicle is at risk of colliding with an obstacle, it is established that - should no measures be taken - the vehicle is in a situation of an impending, probable and/or imminent collision with a detected obstacle. Furthermore, since the evasive manoeuvre system then determines a drivable zone considered safe driving for the vehicle, an extended driving area is established in which it is judged to be safe for the vehicle to continue driving. Accordingly, rather than defining merely a single collision avoidance trajectory, which is commonly known in the art, a two-dimensional safe area is defined. Moreover, since the evasive manoeuvre system further detects a driver initiated collision avoidance manoeuvre, there is established that an attempt has been initiated by the driver to avoid the impending collision. Furthermore, since the evasive manoeuvre system moreover intervenes in the control of the vehicle, such that the vehicle is maintained within the drivable zone, the driver's control of the vehicle is intervened to an extent that the vehicle is manoeuvred to continue driving in the drivable zone. Accordingly, rather than intervening in the driver's control of the vehicle such that the vehicle is manoeuvred to continue driving along a single collision avoidance trajectory, as commonly known in the art, the evasive manoeuvre system of the present disclosure allows for the vehicle to continue driving within an entire safe zone, rather than follow a single collision avoidance trajectory. Thereby, more than merely one possible collision avoidance trajectory is supported; rather an entire drivable zone is supported, which zone is considered safe driving for the vehicle. That is, an entire span, e.g. width, of the drivable zone may be utilized for avoiding a collision with the obstacle, and subsequently, a wide variety of intervention control options may be utilized.

For that reason, there is provided an improved evasive manoeuvre approach for a vehicle at risk of an impending or probable collision with an obstacle.

The technical features and corresponding advantages of the above mentioned method will be discussed in further detail in the following.

By introducing a method performed by an evasive manoeuvre system for providing a driver behaviour adapted evasive manoeuvre to a vehicle at risk of an impending collision, an approach is provided which - as will be described below - assists the driver in avoiding collision in a manner pertinent to how the driver controls the vehicle in his/her attempt to avoid said impending collision. The word "vehicle" may refer to any arbitrary vehicle, such as car, truck, lorry, van, bus, motor cycle, scooter, tractor, golf cart or military vehicle. Moreover, the vehicle may be provided with four-wheel drive, front-wheel drive and/or rear-wheel drive. The expression "driver behaviour adapted" evasive manoeuvre may refer to "driver reaction adapted", "driver control adapted", and/or "driver steering and/or driver braking adapted" evasive manoeuvre, whereas "evasive manoeuvre" may refer to "collision avoidance manoeuvre", "evasive control", and/or "evasive assistance". Moreover, "providing" may in this context refer to "applying", whereas "impending" collision may refer to "imminent" collision.

Since the evasive manoeuvre system detects a driving environment of the vehicle, a surrounding of the vehicle is established which may have impact on the vehicle's driving conditions. Detecting - e.g. sensing - the driving environment may be accomplished in any arbitrary known manner, e.g. with support from one or more of an environment detecting sensor - e.g. an ambient sensor - such as a camera sensor, a radar sensor, and/or a LIDAR (Light detection and Ranging) sensor, which one or more sensors are known per se to the person skilled in the art, and from which the detected driving environment may be derived by the evasive manoeuvre system - for instance over a wired communications bus such as via e.g. CAN, FlexRay, MOST or the like, or wirelessly such as via e.g. Bluetooth, WiFi or the like. Detecting the driving environment may be performed continuously and/or intermittently. "Detecting" the driving environment may hence refer to "determining", "deriving", "monitoring" and/or "sensing" the driving environment, and/or refer to "deriving" the driving environment "from one or more of an environment detecting sensor(s) on-board the vehicle". Moreover, "detecting the driving environment" may refer to "detecting the driving environment in a forward and/or sideways direction of the vehicle".

Since the evasive manoeuvre system furthermore determines that the vehicle is at risk of colliding with an obstacle, it is established that - should no measures be taken - the vehicle is in a situation of an impending, probable and/or imminent collision with a detected obstacle. Determining the risk of collision may be accomplished in any arbitrary known manner, e.g. by means of commonly known collision threat assessment. "Obstacle" may hence refer to any arbitrary object of a size, shape and/or character, which through threat assessment is determined to constitute an obstacle with which collision should be avoided, e.g. another vehicle, a person, an animal, a natural or structural feature etc. To some extent, "obstacle" may even refer to one or more potholes in e.g. the road. Accordingly, "obstacle" may in this context refer to "obstacle with which a collision is considered worthwhile avoiding". Moreover, the expression of "determining" that the vehicle is at risk of colliding may in this context refer to "calculating" and/or "making a decision" that the vehicle is at risk of colliding. The obstacle may for instance be positioned ahead of the vehicle, e.g. on a road, and/or in a lane, along which the vehicle is travelling. Additionally or alternatively, the obstacle may merely in part be positioned on the e.g. road ahead of the vehicle, for instance should the obstacle be represented by another e.g. vehicle inappropriately turning onto said road from a crossing road. In order to support threat assessment, the vehicle may be adapted to determine vehicle speed, as commonly known in the art. According to an example "determining that the vehicle is at risk of colliding with an obstacle" may comprise "determining that the vehicle is at risk of colliding with an obstacle ahead, or essentially ahead, of the vehicle".

Since the evasive manoeuvre system moreover determines a drivable zone considered safe driving for the vehicle, an extended driving area is established in which it is judged to be safe for the vehicle to continue driving. That is, upon it being determined that the vehicle is at risk of colliding with the obstacle, a fictive drivable zone is established ranging from a current position - or an essentially current position - of the vehicle, and extending beyond - or essentially beyond - a current position of the obstacle or an estimated subsequent position of the obstacle, which drivable zone is estimated to be safe for the vehicle to continue driving in. Accordingly, rather than defining merely a single collision avoidance trajectory, which is commonly known in the art, a two-dimensional safe area is defined which may have a width in a lateral direction of the vehicle. The "driveable zone" may be determined such that is does not overlap an estimated trajectory of the detected obstacle or an estimated position of the obstacle when the vehicle is estimated to pass the obstacle. Alternatively, the "drivable zone" may be determined such that it does not overlap an estimated trajectory of the detected obstacle where it is estimated for the vehicle to pass the obstacle. Moreover, the "drivable zone" may be of any arbitrary width, length and shape, said shape being defined by restraints restricting the drivable zone in order to be considered safe for the vehicle to continue driving in. Said restraints restricting and/or defining the shape of the drivable zone need not necessarily merely relate to avoiding collision with the detected obstacle, but may additionally relate to other safety aspects such as e.g. avoiding departing a road along which the vehicle is travelling, exceeding vehicle dynamics restrictions, and/or exceeding a recommended maximum stress level of a vehicle occupant (e.g. the driver or a passenger) pertinent vehicle movement, e.g. jerky vehicle manoeuvring. The drivable zone may be determined based on standard polynomial mathematic functions utilizing input such as the detected driving environment and subsequently the position of the detected obstacle and potential other boundary conditions. "Determining" a drivable zone may in this context refer to "defining" and/or "calculating" a drivable zone. "Drivable zone" may refer to "fictive drivable zone", and further to "safe zone" or "zone restricted by safety restraints". Moreover, "zone" may refer to "region" and/or "area", and further to "zone in a plane essentially coinciding with a plane of a road along which the vehicle is travelling". The expression of a drivable zone "considered" safe driving may refer to a drivable zone "determined", "estimated" and/or "calculated" safe driving. According to an example "determining a drivable zone considered safe driving for the vehicle" may comprise "determining a drivable zone essentially ahead of the vehicle considered safe driving for the vehicle".

Since the evasive manoeuvre system further detects a driver initiated collision avoidance manoeuvre, there is established that an attempt has been initiated by the driver to avoid the impending or probable collision. Detecting the driver initiated collision avoidance manoeuvre may be accomplished in any arbitrary known manner, e.g. with support from one or more of a driver manoeuvre detecting sensor, such as a steering angle sensor, a torsion bar torque sensor, a pinion angle sensor, a road wheel turning sensor, a driver heartbeat rate sensor, and/or a sensor for detecting dilated driver pupils, which one or more sensors are known per se to the person skilled in the art, and from which the detected driver initiated collision avoidance manoeuvre may be derived by the evasive manoeuvre system - for instance over a wired communications bus such as via e.g. CAN, FlexRay, MOST or the like, or wirelessly such as via e.g. Bluetooth, WiFi or the like. "Detecting" the driver initiated collision avoidance manoeuvre may hence refer to "determining", "deriving", "monitoring" and/or "sensing" the driver initiated collision avoidance manoeuvre, and/or refer to "deriving" the driver initiated collision avoidance manoeuvre "from one or more of a driver manoeuvre detecting sensor(s) on-board the vehicle". "Driver initiated" may in this context refer to "driver performed". Moreover, the expression of driver initiated "collision avoidance manoeuvre" may refer to driver initiated "collision avoidance control", "collision avoidance activity" and/or "collision avoidance steering".

According to an example, the expression "detecting a driver initiated collision avoidance manoeuvre" may comprise "detecting: a driver initiated turn of one or more vehicle wheels of the vehicle; a driver initiated turn of a steering wheel of the vehicle; a driver initiated torsion bar torque of a torsion bar of the vehicle; and/or a driver initiated change of a pinion angle of a pinion of the vehicle".

Since the evasive manoeuvre system moreover intervenes in the control of the vehicle, such that the vehicle is maintained within the drivable zone, the driver's control of the vehicle is intervened to an extent that the vehicle is manoeuvred to continue driving in the drivable zone. Accordingly, rather than intervening in the driver's control of the vehicle such that the vehicle is manoeuvred to continue driving along a single collision avoidance trajectory, as commonly known in the art, the evasive manoeuvre system of the present disclosure allows for the vehicle to continue driving within an entire safe zone, rather than follow a single collision avoidance trajectory. Thereby, more than merely one possible collision avoidance trajectory is supported; rather an entire drivable zone is supported, which zone is considered safe driving for the vehicle. That is, an entire span, e.g. width, of the drivable zone may be utilized for avoiding a collision with the obstacle, and subsequently, a wide variety of intervention control options may be utilized. Intervening in the "control" of the vehicle may refer to intervening in the "driver's control", in the "driver initiated collision avoidance manoeuvre" and/or in the "steering" of the vehicle. Control intervention may be applied to the vehicle in any arbitrary known manner, e.g. by one or more of a steering torque and/or a braking torque being applied. Moreover, the expression "such that the vehicle is maintained within the drivable zone" may refer to "such that continued driving of the vehicle is restricted to the drivable zone" and/or "such that the vehicle is manoeuvred to drive within the drivable zone".

According to an embodiment, the evasive manoeuvre system may intervene in the control of the vehicle only when the vehicle is moving toward leaving the drivable zone. Thereby, by intervening only when the vehicle is moving toward leaving the drivable zone, control intervention need only to be applied when the driver is manoeuvring the vehicle toward leaving the drivable zone, not if the driver by himself/herself is manoeuvring the vehicle in a satisfying manner - i.e. remains within the drivable zone - when attempting to avoid the impending collision. Thus, there is provided less oscillation in terms of control stability. Accordingly, a driver behaviour adapted evasive manoeuvre is provided in that control intervention only is applied should the driver's attempt to avoid a collision with the obstacle prove to be insufficient, i.e. should the vehicle move toward leaving the drivable zone. Thus, the control intervention is adapted to the collision avoidance control provided by the driver, and the introduced evasive manoeuvre system may accordingly assist drivers of different types, ranging from those who do not apply enough collision avoidance manoeuvring to those who apply an excessive amount of collision avoidance manoeuvring in their attempts to avoid the impending collision. "Moving toward leaving" may refer to "about to leave" and/or "close to leaving", e.g. in a lateral direction of the vehicle. "Close" may in this context refer to a few centimetres up to several meters, depending on e.g. the speed of the vehicle. According to an example, "moving toward leaving" the drivable zone may refer to "moving toward outer boundaries of" and/or "moving - in a lateral direction - toward outer boundaries of" the drivable zone, for example when a vehicle's wheels leave the driving surface of a road.

According to another embodiment, intervening in the control of the vehicle may comprise intervening in the steering of the vehicle, such that the vehicle is maintained within the drivable zone. Thereby, in that the control intervention comprises steering intervention, steering - such as the driver's steering - of the vehicle is intervened to an extent that the vehicle is manoeuvred to continue driving in the drivable zone. Thus, the steering intervention is adapted to the collision avoidance control provided by the driver, and the introduced evasive manoeuvre system may accordingly assist drivers of different types, ranging from those who steer too little to those who steer too much in their attempts to avoid the impending collision. In the latter case, for instance, a steering torque in the opposite direction may be applied by the evasive manoeuvre system. Steering intervention may be applied to the vehicle in any arbitrary known manner, e.g. with support from one or more of a steering assisting device adapted to apply a steering torque.

Additionally, intervening in the control of the vehicle may further comprise intervening in the braking of the vehicle, such that the vehicle is maintained within the drivable zone. Thereby, in that the control intervention - in addition to steering intervention - also comprises braking intervention, steering as well as braking - such as the driver's braking - of the vehicle is intervened to an extent that the vehicle is manoeuvred to continue driving in the drivable zone. Thus, the steering intervention and braking intervention is adapted to the collision avoidance control provided by the driver, and the introduced evasive manoeuvre system may accordingly assist drivers of different types, ranging from those who steer and/or brake too little to those who steer and/or brake too much in their attempts to avoid the impending collision. Braking intervention may be applied to the vehicle in any arbitrary known manner, e.g. with support from one or more of a braking assisting device adapted to apply a braking torque. Braking intervention may be applied to one or more of the vehicle wheels, depending on the sought after braking effect, and the applied braking torque may vary from one vehicle wheel to another.

According to yet another embodiment, determination of a drivable zone may comprise that the evasive manoeuvre system determines a drivable zone - e.g. essentially ahead of the vehicle - considered safe driving for the vehicle, based on **collision avoidance.** Thereby, in that the evasive manoeuvre system determines a drivable zone based on collision avoidance, an extended driving area is established in which it is judged to be safe for the vehicle to continue driving, since the drivable zone is determined such that collision with the obstacle - and possibly one or more additional detected obstacles - is estimated to be avoided. That is, the driveable zone may be determined such that is does not overlap the current or subsequent estimated position of the obstacle or the estimated trajectory of the obstacle, and/or current or subsequent estimated positions or estimated trajectories of the potential one or more additional detected obstacles. Threat assessment pertinent the ongoing situation may, as previously indicated, be accomplished in any arbitrary known manner. Subsequently, the evasive manoeuvre system may be made aware of the impending collision, and accordingly, in determining a drivable zone, base the drivable zone on avoiding collision with the obstacle, and/or the potential one or more additional detected obstacles. "Based on" collision avoidance may refer to "taking into account" and/or "taking into consideration". Moreover, "based on collision avoidance" may refer to "based on said drivable zone not comprising a current or subsequent estimated position of said obstacle or an estimated trajectory of said obstacle, and/or estimated current or subsequent positions or trajectories of one or more additional detected obstacles".

Additionally or alternatively, determination of a drivable zone may comprise that the evasive manoeuvre system determines a drivable zone - e.g. essentially ahead of the vehicle - considered safe driving for the vehicle, based on **avoidance of departing a road along which the vehicle is travelling.** Thereby, in that the evasive manoeuvre system determines a drivable zone based on avoidance of departing a road along which the vehicle is travelling, an extended driving area is established in which it is judged to be safe for the vehicle to continue driving, since the drivable zone is determined such that departure from the road by the vehicle is estimated to be avoided. That is, in detecting the driving environment, the evasive manoeuvre system may be made aware of one or more roadsides of the road along which the vehicle is travelling. Accordingly, by taking said detected roadside(s) into consideration in determining a drivable zone, it may be provided that the drivable zone is considered safe driving for the vehicle when it comes to avoiding departing said road. "Based on" avoidance of departing a road along which the vehicle is travelling may refer to "taking into account" and/or "taking into consideration" avoidance of departing a road along which the vehicle is travelling, whereas "departing" may refer to "leaving". Moreover, "based on avoidance of departing a road along which the vehicle is travelling", may refer to "based on avoidance of crossing a roadside of a road along which the vehicle is travelling" and/or "based on said drivable zone not extending beyond a roadside of a road along which the vehicle is travelling".

Additionally or alternatively, determination of a drivable zone may comprise that the evasive manoeuvre system determines a drivable zone - e.g. essentially ahead of the vehicle - considered safe driving for the vehicle, based on **dynamics restrictions derived from vehicle dynamics of the vehicle.** Thereby, in that the evasive manoeuvre system determines a drivable zone based on dynamics restrictions derived from vehicle dynamics of the vehicle, an extended driving area is established in which it is judged to be safe for the vehicle to continue driving, since the drivable zone is determined in view of vehicle dynamic restraints of the vehicle and subsequently the situation the vehicle is currently subjected to. Evaluation of the vehicle dynamics restrictions pertinent the ongoing situation may be accomplished in any arbitrary known manner. Subsequently, the evasive manoeuvre system may be made aware of the dynamics restrictions, and accordingly, in determining a drivable zone, base the drivable zone on said vehicle dynamics restrictions, which may vary from one type of vehicle to another. Accordingly, by taking said vehicle dynamics restrictions into consideration in determining the drivable zone, it may be provided that the drivable zone is considered safe driving for the vehicle when it comes to avoiding e.g. the vehicle excessively skidding and/or even potentially flipping over. "Based on" dynamics restrictions derived from vehicle dynamics of the vehicle may refer to "taking into account" and/or "taking into consideration" dynamics restrictions derived from vehicle dynamics of the vehicle, whereas "derived from" may refer to "determined from". Moreover, "based on dynamics restrictions derived from vehicle dynamics of the vehicle", may refer to "based on the drivable zone being restricted in a lateral direction of said vehicle such that vehicle dynamic restrictions of said vehicle are not exceeded".

Additionally or alternatively, determination of a drivable zone may comprise that the evasive manoeuvre system determines a drivable zone - e.g. essentially ahead of the vehicle - considered safe driving for the vehicle, based on **stress level restrictions of a vehicle occupant pertinent vehicle movement.** Thereby, in that the evasive manoeuvre system determines a drivable zone based on stress level restrictions of a vehicle occupant due to vehicle movement, e.g. jerky vehicle movement, an extended driving area is established in which it is judged to be safe for the vehicle to continue driving, since the drivable zone is determined in view of a maximum allowed stress level of a vehicle occupant. Evaluation of the stress level restrictions of the vehicle occupant pertinent vehicle movement may be accomplished in any arbitrary known manner. Subsequently, the evasive manoeuvre system may be made aware of the stress level restrictions of the vehicle occupant, and accordingly, in determining a drivable zone, base the drivable zone on said stress level restrictions. Accordingly, by taking said stress level restrictions into consideration in determining the drivable zone, it may be provided that the drivable zone is considered safe driving for the vehicle when it comes to avoiding jerky control/manoeuvring of the vehicle, e.g. over-excessive jerky control of the vehicle. Thereby, it is provided for avoidance of an over-excessive traumatic experience for the vehicle occupant, and/or in avoiding over-excessive physical straining - potentially harmful - of the vehicle occupant, such as e.g. the vehicle occupant's head being hastily thrown to the side, and/or e.g. bruising from the safety belt. "Based on" stress level restrictions of a vehicle occupant may refer to "taking into account" and/or "taking into consideration" stress level restrictions of a vehicle occupant, whereas "stress level" restrictions may refer to "psychological" and/or "physical" restrictions. Moreover, "based on stress level restrictions of a vehicle occupant pertinent vehicle movement" may refer to "based on the drivable zone being restricted in a lateral direction and/or a longitudinal direction of said vehicle such that stress level restrictions of a vehicle occupant pertinent vehicle movement are not exceeded".

According to still another embodiment, the determination of a drivable zone may further comprise that the evasive manoeuvre system determines a drivable zone - e.g. essentially ahead of the vehicle - considered safe driving for the vehicle, wherein a first boundary of the drivable zone is based on a distance between the obstacle and the vehicle and an outer edge of the obstacle, which first boundary represents a tight trajectory passing close to the obstacle. Thereby, in that a first boundary of the drivable zone is based on a distance between the obstacle and the vehicle and an outer edge of the obstacle - which outer edge may be facing the vehicle - and which first boundary represents a tight trajectory passing close to the obstacle, an extended driving area is established in which it is judged to be safe for the vehicle to continue driving, since the first boundary delimits the drivable zone from the obstacle, or from a current or subsequent estimated position of the obstacle and/or from an estimated trajectory of the obstacle. That is, the first boundary may be determined such that it does not overlap a current or subsequent estimated position of the obstacle or an estimated trajectory of the obstacle where it is estimated for the vehicle to pass the obstacle, whereby collision with the obstacle may be avoided. Moreover, since the first boundary represents a tight trajectory passing - at least partly - close to - or relatively close to - the obstacle, the first boundary of the drivable zone is determined such that it indicates a fictive trajectory which margins when passing by the obstacle may be relatively small, for instance a few centimetres up to several meters depending on e.g. the speed of the vehicle. For instance, the first boundary may represent a "mild style" evasion manoeuvre, which may require a relatively small yaw and lateral acceleration at the beginning of the manoeuvre while still providing that the vehicle does not collide with the obstacle. The first boundary may range from a current position - or an essentially current position - of the vehicle, and extending beyond - or essentially beyond - the obstacle. Moreover, the first boundary may be of any arbitrary length and shape, and may be determined based on standard polynomial mathematic functions utilizing input such as the detected driving environment and subsequently the position of the detected obstacle. The distance between the obstacle and the vehicle may be determined continuously or intermittently, as commonly known in the art. Furthermore, "an outer edge of the obstacle" may refer to "an outer edge of the obstacle facing the vehicle". Moreover, the "outer edge" of the obstacle may refer to an outer surface of the obstacle or point on the obstacle. "A tight trajectory passing close to the obstacle" may refer to "a tight trajectory at least partly passing close to the obstacle", and further to "a tight trajectory passing relatively close to the obstacle". Furthermore, "passing close to the obstacle" may refer to "passing close to the outer edge of the obstacle".

According to one embodiment, the determination of a drivable zone may further comprise that the evasive manoeuvre system determines a drivable zone - e.g. essentially ahead of the vehicle - considered safe driving for the vehicle, wherein a second boundary of the drivable zone is based on at least a first environment boundary derived from the detected driving environment, beyond which driving is assumed or known to be unsuitable, which second boundary represents a wide trajectory passing close to the at least first detected environment boundary. Thereby, in that a second boundary of the drivable zone is based on one or more environment boundaries derived from the detected driving environment - beyond which driving is unsuitable - and which second boundary represents a wide trajectory passing close to the one or more detected environment boundaries, an extended driving area is established in which it is judged to be safe for the vehicle to continue driving, since the second boundary delimits the drivable zone from the at least first detected environment boundary. That is, the second boundary may be determined such that it does not extend beyond the detected environment boundary, whereby it is provided avoidance of the vehicle moving into an area unsuitable for driving. The at least first detected environment boundary may for instance refer to one or more of a roadside of a road along which the vehicle is travelling, a road marking, and/or a lane marking, etc. Moreover, since the second boundary represents a wide trajectory passing - at least partly - close to - or relatively close to - the at least first detected environment boundary, the second boundary of the drivable zone is determined such that it indicates a fictive trajectory which margins to the environment boundary may be relatively small, for instance a few centimetres up to several meters depending on e.g. the speed of the vehicle. For instance, the second boundary may represent an "aggressive style" evasion manoeuvre, which may require a relatively large yaw and lateral acceleration at the beginning of the manoeuvre while still providing that continued driving of the vehicle is maintained within the drivable zone without crossing the environment boundary. The second boundary may range from a current position - or an essentially current position - of the vehicle, and extending beyond - or essentially beyond - the obstacle. Moreover, the second boundary may be of any arbitrary length and shape, and may be determined based on standard polynomial mathematic functions utilizing input such as the detected driving environment and subsequently the one or more detected environment boundaries. "A wide trajectory passing close to the at least first detected environment boundary" may refer to "a wide trajectory at least partly passing close to the at least first detected environment boundary", and further to "a wide trajectory passing relatively close to the at least first detected environment boundary". "Based on" may in this context refer to "taking into account" and/or considering, whereas "assumed or known" may refer to "estimated or determined". Moreover, "unsuitable" may in this context refer to "inappropriate", "non-preferred", "dangerous" and/or "un-drivable".

According to another embodiment, the second boundary may be based on an outer edge of a road derived from the detected driving environment, along which road the vehicle is travelling. Thereby, in that the second boundary is based on a detected roadside, departure from the road by the vehicle is estimated to be avoided. That is, in detecting the driving environment, the evasive manoeuvre system may be made aware of one or more outer edges - i.e. roadsides - of the road along which the vehicle is travelling. Accordingly, by taking said detected outer edge(s) into consideration in determining the second boundary of the drivable zone, it may be provided that the drivable zone is considered safe driving for the vehicle when it comes to avoiding departing said road. According to an example, the outer edge of the road may be provided with detectable road markings. According to a second aspect of embodiments herein, the object is achieved by an evasive manoeuvre system configured for providing a driver behaviour adapted evasive manoeuvre to a vehicle at risk of an impending - or probable - collision. The evasive manoeuvre system comprises an environment detecting unit adapted for detecting a driving environment of the vehicle. The evasive manoeuvre system further comprises an impending collision determining unit adapted for determining that the vehicle is at risk of colliding with an obstacle, e.g. essentially ahead of the vehicle. Moreover, the evasive manoeuvre system comprises a drivable zone determining unit adapted for determining a drivable zone - e.g. essentially ahead of the vehicle - considered safe driving for the vehicle. Furthermore, the evasive manoeuvre system comprises a driver manoeuvre detecting unit adapted for detecting a driver initiated collision avoidance manoeuvre. The evasive manoeuvre system moreover comprises an intervening unit adapted for intervening in the control of - e.g. steering of - the vehicle, such that the vehicle is maintained within the drivable zone.

According to an embodiment, the intervening unit may be adapted for intervening only when the vehicle is moving toward leaving the drivable zone.

According to another embodiment, the intervening unit may further be adapted for intervening in steering and/or braking of the vehicle, such that the vehicle is maintained within the drivable zone.

According to another embodiment, the drivable zone determining unit may be adapted for determining a drivable zone - e.g. essentially ahead of the vehicle - considered safe driving for the vehicle, based on: collision avoidance.

Additionally or alternatively, the drivable zone determining unit may be adapted for determining a drivable zone - e.g. essentially ahead of the vehicle - considered safe driving for the vehicle, based on: avoidance of departing a road along which the vehicle is travelling.

Additionally or alternatively, the drivable zone determining unit may be adapted for determining a drivable zone - e.g. essentially ahead of the vehicle - considered safe driving for the vehicle, based on: dynamics restrictions derived from vehicle dynamics of the vehicle.

Additionally or alternatively, the drivable zone determining unit may be adapted for determining a drivable zone - e.g. essentially ahead of the vehicle - considered safe driving for the vehicle, based on: a stress level restriction of a vehicle occupant pertinent vehicle movement.

According to yet another embodiment, the drivable zone determining unit may further be adapted for determining a drivable zone - e.g. ahead of the vehicle - considered safe driving for the vehicle, wherein a first boundary of the drivable zone is based on a distance between the obstacle and the vehicle and an outer edge of the obstacle, for instance an outer edge of the obstacle facing the vehicle, wherein the first boundary represents a tight trajectory passing close to the obstacle, e.g. a tight trajectory at least partly passing relatively close to the obstacle.

According to still another embodiment, the drivable zone determining unit may further be adapted for determining a drivable zone - e.g. essentially ahead of the vehicle - considered safe driving for the vehicle, wherein a second boundary of the drivable zone is based on at least a first environment boundary derived from the detected driving environment, beyond which driving is assumed or known to be unsuitable, wherein the second boundary represents a wide trajectory passing close to the at least first detected environment boundary, e.g. a wide trajectory at least partly passing relatively close to the at least first detected environment boundary.

According to one embodiment, the second boundary may be based on an outer edge of a road derived from the detected driving environment, along which road the vehicle is travelling.

According to an example, the driver manoeuvre detecting unit may be adapted for detecting: an initiated turn of one or more vehicle wheels of the vehicle; an initiated turn of a steering wheel of the vehicle; an initiated torsion bar torque of a torsion bar of the vehicle; and/or an initiated change of a pinion angle of a pinion of the vehicle.

Similar advantages as those mentioned in the foregoing in relation to the first aspect correspondingly apply to the second aspect, which is why these advantages are not further discussed.

According to a third aspect of embodiments herein, the object is achieved by a vehicle comprising at least a portion of the evasive manoeuvre system discussed above, i.e. one or more of the environment detecting unit, the impending collision determining unit, the drivable zone determining unit, the driver manoeuvre detecting unit, and/or the intervening unit described above. The vehicle furthermore comprises one or more of an environment detecting sensor, a driver manoeuvre detecting sensor; a steering assisting device; and/or a braking assisting device. Once more, similar advantages as those mentioned in the foregoing in relation to the first aspect correspondingly apply to the third aspect, which is why these advantages are not further discussed.

According to a fourth aspect of embodiments herein, the object is achieved by a computer program product comprising a computer program containing computer program code means arranged to cause a computer or a processor to execute the steps of the evasive manoeuvre system discussed above, stored on a computer-readable medium or a carrier wave. Yet again, similar advantages as those mentioned in the foregoing in relation to the first aspect correspondingly apply to the fourth aspect, which is why these advantages are not further discussed.

### BRIEF DESCRIPTION OF THE DRAWINGS

The various aspects of the non-limiting embodiments of the invention, including particular features and advantages, will be readily understood from the following detailed description and the accompanying drawings, in which:
**Figure 1** illustrates a schematic overview of an exemplifying evasive manoeuvre system according to embodiments of the disclosure;
**Figure 2** is a schematic block diagram illustrating an exemplifying evasive manoeuvre system according to embodiments of the disclosure; and
**Figure 3** is a flowchart depicting an exemplifying method performed by an evasive manoeuvre system according to embodiments of the disclosure.

### DETAILED DESCRIPTION

The non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to providing a driver behaviour adapted evasive manoeuvre to a vehicle at risk of an impending collision, there will be disclosed that the inventive concept assists the driver in avoiding collision in a manner pertinent to how the driver controls the vehicle in his/her attempt to avoid said impending collision.

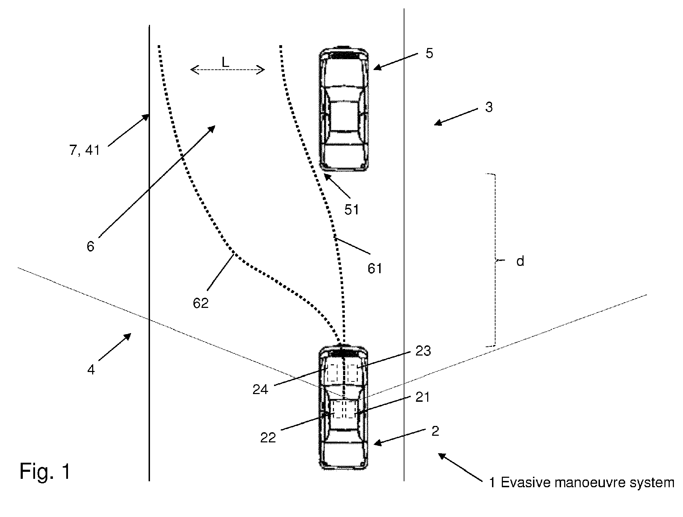

Referring now to the figures and **Figure 1** in particular, there is depicted a schematic overview of an exemplifying **evasive manoeuvre system 1** according to embodiments of the disclosure. The evasive manoeuvre system 1, which will be described in further detail later on in this description, is configured for providing a driver behavior adapted evasive manoeuvre to a **vehicle 2** at risk of an impending collision. The evasive manoeuvre system 1 is at least partly comprised in a **vehicle 2**, which in the shown embodiment is represented by a passenger car.

The vehicle 2 here furthermore comprises an **environment detecting sensor 21**, which is adapted to detect a **driving environment 3** of the vehicle 2. The environment detecting unit 21 is in the example of Fig. 1 represented by a LIDAR.

Moreover, the vehicle 2 in the shown embodiment comprises a **driver manoeuvre detecting sensor 22**, which is adapted to detect a driver initiated collision avoidance manoeuvre. The driver manoeuvre detecting sensor 22 is here represented by a steering wheel angle sensor, whereas the driver initiated collision avoidance manoeuvre is represented by a steering wheel (not shown) of the vehicle 2 having been turned by a driver of the vehicle 2.

The vehicle 2 furthermore here comprises a **steering assisting device 23**, which is adapted to apply a steering torque to the vehicle 2, e.g. to a torsion bar, rack bar and/or steering column thereof. Moreover, the vehicle 2 in the shown embodiment comprises a **braking assisting device 24**, which is adapted to apply a braking torque to the vehicle 2. The braking assisting device 24 may for instance apply a braking torque to one or more of vehicle wheels (not shown) of the vehicle 2, depending on the sought after braking effect, and the applied braking torque may furthermore vary from one vehicle wheel to another.

The vehicle 2 is depicted to be travelling along a **road 4**, which road 4 is delimited by an **outer edge 41** - i.e. a roadside 41 - on the left hand side of the road 4, beyond which it is considered unsuitable to drive the vehicle 2.

Further depicted in Fig. 1 is an **obstacle 5**, with which the vehicle 2 is at risk of colliding. The obstacle 5 is here represented by an exemplifying second vehicle, which may be referred to as a "target vehicle" 5. The obstacle 5, namely the target vehicle in the shown embodiment, has an exemplifying **outer edge 51** on the left hand side facing the vehicle 2. The obstacle 5, i.e. the exemplifying target vehicle, is here at a **distance d** from the vehicle 2.

Yet further depicted in Fig. 1 is a **drivable zone 6**, which is considered safe driving for the vehicle 2. The drivable zone 6, which will be further described later on, here comprises a **first boundary 61** and a **second boundary 62**, both of which correspondingly will be further described later on. The second boundary 62 is here represented by the outer edge 41 of the road 4.

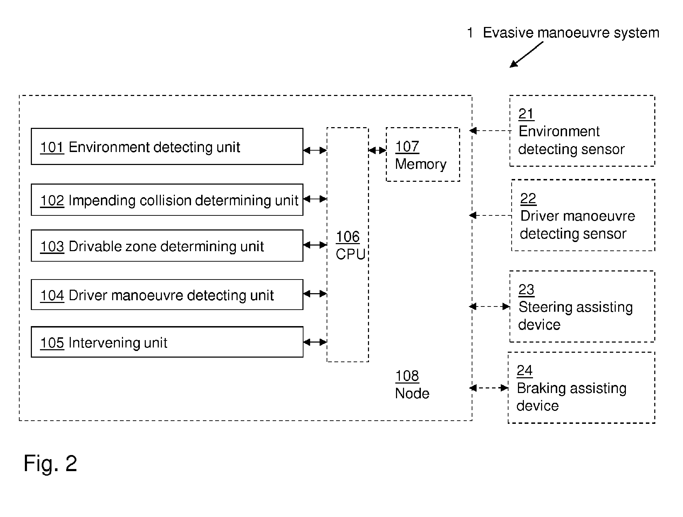

As further shown in **Figure 2**, which is a schematic block diagram illustrating an exemplifying evasive manoeuvre system 1 according to embodiments of the disclosure, the evasive manoeuvre system 1 is, as previously mentioned in conjunction with Fig. 1, configured for providing a driver behavior adapted evasive manoeuvre to a vehicle 2 at risk of an impending collision.

The evasive manoeuvre system 1 comprises an **environment detecting unit 101,** an **impending collision determining unit 102**, a **drivable zone determining unit 103**, a **driver manoeuvre detecting unit 104**, and an **intervening unit 105**, all of which will be described in further detail below. Furthermore, the embodiments herein for providing a driver behavior adapted evasive manoeuvre to a vehicle 2 at risk of an impending collision, may be implemented through one or more processors, such as a **processor 106**, here denoted CPU, together with computer program code for performing the functions and actions of the embodiments herein. Said program code may also be provided as a computer program product, for instance in the form of a data carrier carrying computer program code for performing the embodiments herein when being loaded into the evasive manoeuvre system 1. One such carrier may be in the form of a CD ROM disc. It is however feasible with other data carriers such as a memory stick. The computer program code may furthermore be provided as pure program code on a server and downloaded to the evasive manoeuvre system 1.

The evasive manoeuvre system 1 may further comprise a **memory 107** comprising one or more memory units. The memory 107 may be arranged to be used to store e.g. information, and further to store data, configurations, schedulings, applications and/or parameters relating to the detected driving environment 3, the obstacle 5, the distance d, threat assessment, the outer edge 41 of the road 4, the drivable zone 6, the first boundary 61, the second boundary 62, the detected driver initiated collision avoidance manoeuvre, control intervention etc., to perform the methods herein when being executed in the evasive manoeuvre system 1.

Furthermore, the environment detecting unit 101, the impending collision determining unit 102, the drivable zone determining unit 103, the driver manoeuvre detecting unit 104, the intervening unit 105, the optional memory 106 and/or the optional processor 107, may for instance be implemented in one or several arbitrary nodes, such as a **node 108**, comprised in the vehicle 2. A node 108 may be an electronic control unit (ECU) or any suitable generic electronic device, and may involve, for instance, an active safety domain module node and/or a main central node. According to an alternative example, the node 108 may, as a complement to being represented by e.g. one or several integrated ECUs, be represented by a plug-in solution, for instance a dongle. In that manner, an aftermarket solution may be provided to any arbitrary vehicle suitable.

Those skilled in the art will also appreciate that the environment detecting unit 101, the impending collision determining unit 102, the drivable zone determining unit 103, the driver manoeuvre detecting unit 104, and/or the intervening unit 105, may refer to a combination of analog and digital circuits, and/or one or more processors configured with software and/or firmware, e.g. stored in a memory such as the memory 107, that when executed by the one or more processors such as the processor 106 perform as will be described in more detail below. One or more of these processors, as well as the other digital hardware, may be included in a single ASIC (Application-Specific Integrated Circuitry), or several processors and various digital hardware may be distributed among several separate components, whether individually packaged or assembled into a SoC (System-on-a-Chip).

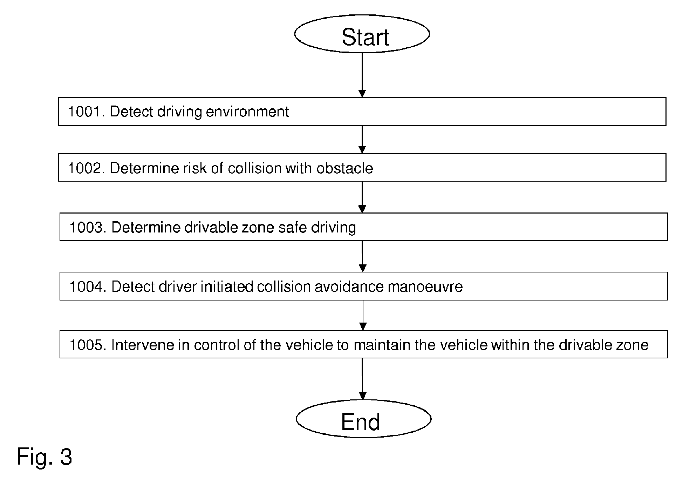

**Figure 3** is a flowchart depicting an exemplifying method performed by an evasive manoeuvre system 1 according to embodiments of the disclosure. The method in the evasive manoeuvre system 1 is, as previously indicated, for providing a driver behavior adapted evasive manoeuvre to a vehicle 2 at risk of an impending collision.

The exemplifying method, which may be continuously repeated, comprises the following actions discussed with support from Figs. 1 and 2. The method may according to an example be repeated - at least partially - approximately every 25 milliseconds, for instance once a risk of an impending collision has been determined, and/or preferably repeated at least as often as every 100 milliseconds, more preferred at least as often as every 50 milliseconds, and/or most preferred at least as often as every 30 milliseconds.

The actions may be taken in any suitable order, and/or one or more actions may even be performed simultaneously where applicable. For instance, Actions 1003 and 1004 may be performed essentially simultaneously, and/or in an alternate order.

### Action 1001

In Action 1001, the evasive manoeuvre system 1 detects the driving environment 3 of the vehicle 2. Correspondingly, the environment detecting unit 101 is adapted for detecting the driving environment 3 of the vehicle 2.

Thus, as shown with support from Figs. 1 and 2, a surrounding of the vehicle 2 is established which may have impact on the vehicle's 2 driving conditions.

### Action 1002

In Action 1002, the evasive manoeuvre system 1 determines that the vehicle 2 is at risk of colliding with the obstacle 5. Correspondingly, the impending collisions determining unit 102 is adapted for determining that the vehicle 2 is at risk of colliding with the obstacle 5. Thus, as shown with support from Figs. 1 and 2, it is established that - should no measures be taken - the vehicle 2 is in a situation of an impending and/or imminent collision with the detected obstacle 5; in the shown embodiment with another vehicle 5.

### Action 1003

In Action 1003, the evasive manoeuvre system 1 determines the drivable zone 6 considered safe driving for the vehicle 2. Correspondingly, the drivable zone determining unit 103 is adapted for determining the drivable zone 6 considered safe driving for the vehicle 2.

Thus, as shown with support from Fig. 1, an extended driving area 6 is established in which it is judged to be safe for the vehicle 2 to continue driving. That is, upon it being determined that the vehicle 2 is at risk of colliding with the obstacle 5, a fictive drivable zone 6 is established ranging from a current position - or an essentially current position - of the vehicle 2, and extending beyond - or essentially beyond - the obstacle 5, which drivable zone 6 is estimated to be safe for the vehicle 2 to continue driving in. Accordingly, rather than defining merely a single collision avoidance trajectory, which is commonly known in the art, a two-dimensional safe area 6 is defined which may have a width in a **lateral direction L** of the vehicle 2.

Optionally, the Action 1003 of determining the drivable zone 6, may comprise determining a drivable zone 6 considered safe driving for the vehicle 2 based on collision avoidance. Correspondingly, the drivable zone determining unit 103 may be adapted for determining a drivable zone 6 considered safe driving for the vehicle 2 based on collision avoidance. Thus, as shown with support from Fig. 1, an extended driving area 6 is established in which it is judged to be safe for the vehicle 2 to continue driving, since the drivable zone 6 is determined such that collision with the obstacle 5 - here the second vehicle - is estimated to be avoided. That is, the driveable zone 6 may be determined such that is does not overlap a current or subsequent position, or estimated trajectory, of the detected obstacle 5.

Moreover, optionally, the Action 1003 of determining the drivable zone 6, may comprise determining a drivable zone 6 considered safe driving for the vehicle 2 based on avoidance of departing the road 4 along which the vehicle 2 is travelling. Correspondingly, the drivable zone determining unit 103 may be adapted for determining a drivable zone 6 considered safe driving for the vehicle 2 based on avoidance of departing the road 4 along which the vehicle 2 is travelling. Thus, as shown with support from Fig. 1, an extended driving area 6 is established in which it is judged to be safe for the vehicle 2 to continue driving, since the drivable zone 6 is determined such that departure from the road 4 by the vehicle 2 is estimated to be avoided. That is, in detecting 1001 the driving environment 3, the evasive manoeuvre system 1 may be made aware of one or more roadsides 41 of the road 4 along which the vehicle 2 is travelling. Accordingly, by taking said detected roadside(s) 41 into consideration in determining a drivable zone 6, it may be provided that the drivable zone 6 is considered safe driving for the vehicle 2 when it comes to avoiding departing said road 4.

Furthermore, optionally, the Action 1003 of determining the drivable zone 6, may comprise determining a drivable zone 6 considered safe driving for the vehicle 2 based on dynamics restrictions derived from vehicle dynamics of the vehicle 2. Correspondingly, the drivable zone determining unit 103 may be adapted for determining a drivable zone 6 considered safe driving for the vehicle 2 based on dynamics restrictions derived from vehicle dynamics of the vehicle 2. Thus, as shown with support from Fig. 1, an extended driving area 6 is established in which it is judged to be safe for the vehicle 2 to continue driving, since the drivable zone 6 is determined in view of vehicle dynamic restraints of the vehicle 2 and subsequently the situation the vehicle 2 is currently subjected to. Subsequently, the evasive manoeuvre system 1 may be made aware of the dynamics restrictions, and accordingly, in determining a drivable zone 6, base the drivable zone 6 on said vehicle dynamics restrictions. Accordingly, by taking said vehicle dynamics restrictions into consideration in determining the drivable zone 6, it may be provided that the drivable zone 6 is considered safe driving for the vehicle 2 when it comes to avoiding e.g. the vehicle 2 excessively skidding and/or even potentially flipping over.

Moreover, optionally, the Action 1003 of determining the drivable zone 6, may comprise determining a drivable zone 6 considered safe driving for the vehicle 2 based on stress level restrictions of a vehicle occupant pertinent vehicle movement. Correspondingly, the drivable zone determining unit 103 may be adapted for determining a drivable zone 6 considered safe driving for the vehicle 2 based on stress level restrictions of a vehicle occupant pertinent vehicle movement. Thus, as shown with support from Fig. 1, an extended driving area 6 may be established in which it is judged to be safe for the vehicle 2 to continue driving, since the drivable zone 6 is determined in view of a maximum allowed stress level of a vehicle occupant due to vehicle manoeuvring. Subsequently, the evasive manoeuvre system 1 may be made aware of the stress level restrictions of the vehicle occupant, and accordingly, in determining a drivable zone 6, base the drivable zone 6 on said stress level restrictions. Accordingly, by taking said stress level restrictions into consideration in determining the drivable zone 6, it may be provided that the drivable zone 6 is considered safe driving for the vehicle 2 when it comes to avoiding jerky control of the vehicle 2, e.g. over-excessive jerky control of the vehicle 2. Thereby, it is provided for avoidance of an over-excessive traumatic experience for the vehicle occupant, and/or in avoiding over-excessive physical straining - potentially harmful - of the vehicle occupant, such as e.g. the vehicle occupant's head being hastily thrown to the side, and/or e.g. bruising from the safety belt.

Further, optionally, the Action 1003 of determining the drivable zone 6, may comprise determining a drivable zone 6 which comprises the first boundary 61, which first boundary 61 is based on the distance d between the obstacle 5 and the vehicle 2 and the outer edge 51 of the obstacle 5, and which first boundary 61 represents a tight trajectory passing close to the obstacle 5. Correspondingly, the drivable zone determining unit 103 may be adapted to determine a drivable zone 6 which comprises the first boundary 61, which first boundary 61 is based on the distance d between the obstacle 5 and the vehicle 2 and the outer edge 51 of the obstacle 5, and which first boundary 61 represents a tight trajectory passing close to the obstacle 5. Thus, as shown with support from Fig. 1, an extended driving area 6 is established in which it is judged to be safe for the vehicle 2 to continue driving, since the first boundary 61 delimits the drivable zone 6 from a current or estimated position of the obstacle 5 or from an estimated trajectory of the obstacle 5. Moreover, since the first boundary 61 represents a tight trajectory passing - at least partly - close to - or relatively close to - the obstacle 5, the first boundary 61 of the drivable zone 6 is determined such that it indicates a fictive trajectory which margins when passing by the obstacle 5 may be relatively small, for instance a few centimetres up to several meters depending on e.g. the speed of the vehicle 2.

Moreover, optionally, the Action 1003 of determining the drivable zone 6, may comprise determining a drivable zone 6 which comprises the second boundary 62, which second boundary 62 is based on the at least first environment boundary 7 derived from the detected driving environment 3 - beyond which driving is assumed or known to be unsuitable - and which second boundary 62 represents a wide trajectory passing close to the at least first detected environment boundary 7. Correspondingly, the drivable zone determining unit 103 may be adapted to determine a drivable zone 6 which comprises the second boundary 62, which second boundary 62 is based on the at least first environment boundary 7 derived from the detected driving environment 3 - beyond which driving is assumed or known to be unsuitable - and which second boundary 62 represents a wide trajectory passing close to the at least first detected environment boundary 7. Thus, as shown with support from Fig. 1, an extended driving area 6 is established in which it is judged to be safe for the vehicle 2 to continue driving, since the second boundary 62 delimits the drivable zone 6 from the at least first detected environment boundary 7; here represented by the outer edge 41 of the road 4. That is, the second boundary 62 may be determined such that it does not extend beyond the detected environment boundary 7, e.g. the roadside 41, whereby it is provided avoidance of the vehicle 2 moving into an area unsuitable for driving. Moreover, since the second boundary 62 represents a wide trajectory passing - at least partly - close to - or relatively close to - the at least first detected environment boundary 62, here namely the roadside 41, the second boundary 62 of the drivable zone 6 is determined such that it indicates a fictive trajectory which margins to the environment boundary 7 may be relatively small, for instance a few centimetres up to several meters depending on e.g. the speed of the vehicle 2.

Optionally - and as discussed above - the second boundary 62 may be based on the outer edge 41 of the road 4 derived from the detected driving environment 3, along which road 4 the vehicle 2 is travelling. Thus, as shown with support from Fig. 1, departure from the road 4 by the vehicle 2 is estimated to be avoided. That is, upon detecting 1001 the driving environment, the evasive manoeuvre system 1 may be made aware of one or more outer edges 41 - i.e. roadsides - of the road 4 along which the vehicle 2 is travelling. Accordingly, by taking said detected outer edge(s) 41 into consideration in determining the second boundary 62 of the drivable zone 6, it may be provided that the drivable zone 6 is considered safe driving for the vehicle 2 when it comes to avoiding departing said road 4.

### Action 1004

In Action 1004, the evasive manoeuvre system 1 detects a driver initiated collision avoidance manoeuvre. Correspondingly, the driver manoeuvre detecting unit 104 may be adapted for detecting a driver initiated collision avoidance manoeuvre.

Thus, as shown with support from Figs. 1 and 2, there is established that an attempt has been initiated by the driver of the vehicle 2 to avoid the impending collision; in the shown embodiment, by the driver detecting manoeuvre sensor 22 - namely the steering wheel angle sensor - sensing a turn of the steering wheel initiated by the vehicle driver.

### Action 1005

In Action 1005, the evasive manoeuvre system 1 intervenes in the control of the vehicle 2 such that the vehicle 2 is maintained within the drivable zone 6. Correspondingly, the intervening unit 105 is adapted for intervening in the control of the vehicle 2 such that the vehicle 2 is maintained within the drivable zone 6.

Thus, as shown with support from Figs. 1 and 2, the driver's control of the vehicle 2 is intervened to an extent that the vehicle 2 is manoeuvred to continue driving in the drivable zone 6. Accordingly, rather than intervening in the driver's control of the vehicle 2 such that the vehicle 2 is manoeuvred to continue driving along a single collision avoidance trajectory, as commonly known in the art, the evasive manoeuvre system 1 of the present disclosure allows for the vehicle 2 to continue driving within an entire safe zone 6, rather than follow a single collision avoidance trajectory. Thereby, more than merely one possible collision avoidance trajectory is supported; rather an entire drivable zone 6 is supported, which zone 6 is considered safe driving for the vehicle 2. That is, an entire span, e.g. width, of the drivable zone may be utilized for avoiding the impending collision with the obstacle 5, and subsequently, a wide variety of intervention control options may be utilized.

Moreover, optionally, the Action 1005 of intervening in the control of the vehicle 2 may comprise intervening in steering of the vehicle 2 such that the vehicle 2 is maintained within the drivable zone 6. Correspondingly, the intervening unit 105 may be adapted to intervene in steering of the vehicle 2 such that the vehicle 2 is maintained within the drivable zone 6. Thus, as shown with support from Figs. 1 and 2, steering - such as the vehicle driver's steering - of the vehicle 2 is intervened to an extent that the vehicle 2 is manoeuvred to continue driving in the drivable zone 6. Thus, the steering intervention is adapted to the collision avoidance control provided by the vehicle driver, and the introduced evasive manoeuvre system 1 may accordingly assist vehicle drivers of different types, ranging from those who steer too little to those who steer too much in their attempts to avoid the impending collision with the obstacle 5. Steering intervention may be applied to the vehicle 2 in any arbitrary known manner, e.g. with support from one or more of the steering assisting device(s) 23 adapted to apply a steering torque.

Moreover, optionally, the Action 1005 of intervening in the control of the vehicle 2 may comprise additionally intervening in braking of the vehicle 2 such that the vehicle 2 is maintained within the drivable zone 6. Correspondingly, the intervening unit 105 may be adapted to additionally intervene in braking of the vehicle 2 such that the vehicle 2 is maintained within the drivable zone 6 Thus, as shown with support from Figs. 1 and 2, steering as well as braking - such as the vehicle driver's braking - of the vehicle 2 is intervened to an extent that the vehicle 2 is manoeuvred to continue driving in the drivable zone 6. Thus, the steering intervention and braking intervention is adapted to the collision avoidance control provided by the vehicle driver, and the introduced evasive manoeuvre system 1 may accordingly assist vehicle drivers of different types, ranging from those who steer and/or brake too little to those who steer and/or brake too much in their attempts to avoid the impending collision. Braking intervention may be applied to the vehicle 2 in any arbitrary known manner, e.g. with support from one or more of the braking assisting device(s) 24 adapted to apply a braking torque.

Furthermore, optionally, the Action 1005 of intervening in the control of the vehicle 2 may comprise intervening only when the vehicle 2 is moving toward leaving the drivable zone 6. Correspondingly, the intervening unit 105 may be adapted for intervening only when the vehicle 2 is moving toward leaving the drivable zone 6. Thus, as shown with support from Figs. 1 and 2, control intervention needs only to be applied when the vehicle driver is manoeuvring the vehicle 2 toward leaving the drivable zone 6, not if the vehicle driver by himself/herself is manoeuvring the vehicle 2 in a satisfying manner - i.e. remains within the drivable zone 6 - when attempting to avoid the impending collision with the obstacle 5. Accordingly, a driver behaviour adapted evasive manoeuvre is provided in that control intervention only is applied should the vehicle driver's attempt(s) to avoid the impending collision with the obstacle 5 prove to be insufficient, i.e. should the vehicle 2 move toward leaving the drivable zone 6. Thus, the control intervention is adapted to the collision avoidance control provided by the vehicle driver, and the introduced evasive manoeuvre system 1 may accordingly assist vehicle drivers of different types, ranging from those who do not apply enough collision avoidance manoeuvring to those who apply an excessive amount of collision avoidance manoeuvring in their attempts to avoid the impending collision with the obstacle 5.

The person skilled in the art realizes that the present disclosure by no means is limited to the preferred embodiments described above. On the contrary, many modifications and variations are possible within the scope of the appended claims. It should furthermore be noted that the drawings not necessarily are to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

## Claims

1. A method performed by an evasive manoeuvre system (1) for providing a driver behaviour adapted evasive manoeuvre to a vehicle (2) at risk of an impending collision, said method comprising:
***detecting*** (1001) a driving environment (3) of said vehicle (2);
***determining*** (1002) that said vehicle (2) is at risk of colliding with an obstacle (5);
***determining*** (1003) a drivable zone (6) considered safe driving for said vehicle (2);
***detecting*** (1004) a driver initiated collision avoidance manoeuvre; and
***intervening*** (1005) in the control of said vehicle (2), such that said vehicle (2) is maintained within said drivable zone (6).

2. The method according to claim 1, wherein said *intervening* (1005) comprises intervening only when said vehicle (2) is moving toward leaving said drivable zone (6).

3. The method according to claim 1 or 2, wherein said *intervening* (1005) comprises intervening in steering and/or braking of said vehicle (2), such that said vehicle (2) is maintained within said drivable zone (6).

4. The method according to any one of claims 1-3, wherein said *determining* (1003) a drivable zone (6) comprises determining a drivable zone (6) considered safe driving for said vehicle (2), based on:
collision avoidance;
avoidance of departing a road (4) along which said vehicle (2) is travelling;
dynamics restrictions derived from vehicle dynamics of said vehicle (2); and/or
a stress level restriction of a vehicle occupant pertinent vehicle movement.

5. The method according to any one of claims 1-4, wherein said *determining* (1003) a drivable zone (6) further comprises determining a drivable zone (6) considered safe driving for said vehicle (2), wherein a first boundary (61) of said drivable zone (6) is based on a distance (d) between said obstacle (5) and said vehicle (2) and an outer edge (51) of said obstacle (5), said first boundary (61) representing a tight trajectory passing close to said obstacle (5).

6. The method according to any one of claims 1-5, wherein said *determining* (1003) a drivable zone (6) further comprises determining a drivable zone (6) considered safe driving for said vehicle (2), wherein a second boundary (62) of said drivable zone (6) is based on at least a first environment boundary (7, 41) derived from said detected driving environment (3), beyond which driving is assumed or known to be unsuitable, said second boundary (62) representing a wide trajectory passing close to said at least first detected environment boundary (7, 41).

7. The method according to claim 6, wherein said second boundary (62) is based on an outer edge (41) of a road (4) derived from said detected driving environment (3), along which road (4) said vehicle (2) is travelling.

8. An **evasive manoeuvre system** (1) configured for providing a driver behaviour adapted evasive manoeuvre to a vehicle (2) at risk of an impending collision, said evasive manoeuvre system (1) comprising:
an **environment detecting unit** (101) adapted for detecting (1001) a driving environment (3) of said vehicle (2);
an **impending collision determining unit** (102) adapted for determining (1002) that said vehicle (2) is at risk of colliding with an obstacle (5);
a **drivable zone determining unit** (103) adapted for determining (1003) a drivable zone (6) considered safe driving for said vehicle (2);
a **driver manoeuvre detecting unit** (104) adapted for detecting (1004) a driver initiated collision avoidance manoeuvre; and
an **intervening unit** (105) adapted for intervening (1005) in the control of said vehicle (2), such that said vehicle (2) is maintained within said drivable zone (6).

9. The evasive manoeuvre system (1) according to claim 8, wherein said intervening unit (105) is adapted for intervening only when said vehicle (2) is moving toward leaving said drivable zone (6).

10. The evasive manoeuvre system (1) according to claim 8 or 9, wherein said intervening unit (105) is adapted for intervening in steering and/or braking of said vehicle (2), such that said vehicle (2) is maintained within said drivable zone (6).

11. The evasive manoeuvre system (1) according to any one of claims 8-10, wherein said drivable zone determining unit (103) is adapted for determining a drivable zone (6) considered safe driving for said vehicle (2), based on:
collision avoidance;
avoidance of departing a road (4) along which said vehicle (2) is travelling;
dynamics restrictions derived from vehicle dynamics of said vehicle (2); and/or
a stress level restriction of a vehicle occupant pertinent vehicle movement.

12. The evasive manoeuvre system (1) according to any one of claims 8-11, wherein said drivable zone determining unit (103) further is adapted for determining a drivable zone (6) considered safe driving for said vehicle (2), wherein a first boundary (61) of said drivable zone (6) is based on a distance (d) between said obstacle (5) and said vehicle (2) and an outer edge (51) of said obstacle (5), said first boundary (61) representing a tight trajectory passing close to said obstacle (5).

13. The evasive manoeuvre system (1) according to any one of claims 8-12, wherein said drivable zone determining unit (103) further is adapted for determining a drivable zone (6) considered safe driving for said vehicle (2), wherein a second boundary (62) of said drivable zone (6) is based on at least a first environment boundary (7, 41) derived from said detected driving environment (3), beyond which driving is assumed or known to be unsuitable, said second boundary (62) representing a wide trajectory passing close to said at least first detected environment boundary (7, 41).

14. The evasive manoeuvre system (1) according to claim 13, wherein said second boundary (62) is based on an outer edge (41) of a road (4) derived from said detected driving environment (3), along which road (4) said vehicle (2) is travelling.

15. A **vehicle** comprising at least a portion of an evasive manoeuvre system (1) according to any one of claims 8-14, and one or more of:
an environment detecting sensor (21);
a driver manoeuvre detecting sensor (22);
a steering assisting device (23); and/or
a braking assisting device (24).
